# EUROPÄISCHE PATENTSCHRIFT

(11) **EP 1 628 865 B1**
(45) Veröffentlichungstag und Bekanntmachung des Hinweises auf die Patenterteilung: **16.01.2008**
(21) Anmeldenummer: 04725915.5
(22) Anmeldetag: 06.04.2004
(51) Int. Cl.: B60T 13/14

(54) **BREMSANLAGE FÜR EIN KRAFTFAHRZEUG**
BRAKE SYSTEM FOR A MOTOR VEHICLE
SYSTEME DE FREINAGE DE VEHICULE MOTEUR

(30) Priorität: 25.04.2003 DE 10318850
(43) Veröffentlichungstag der Anmeldung: 01.03.2006
(73) Patentinhaber: Lucas Automotive GmbH, 56070 Koblenz (DE)
(72) Erfinder: OHLIG, Benedikt, 56179 Vallendar (DE); GIERING, Wilfried, 56743 Mendig (DE); MICHELS, Erwin, 56829 Kail (DE)
(74) Vertreter: Thum, Bernhard
(86) Internationale Anmeldenummer: PCT/EP2004/003652
(87) Internationale Veröffentlichungsnummer: WO 2004/103787

(56) Entgegenhaltungen:
- DE-A- 3 523 776
- DE-A- 10 053 586
- DE-A- 19 703 776
- US-A- 4 723 412
- US-A- 6 065 815

## Beschreibung

Die Erfindung betrifft eine Bremsanlage für ein Kraftfahrzeug nach dem Oberbegriff von Patentanspruch 1.

Derartige Bremsanlagen sind aus dem Stand der Technik bekannt. So zeigt beispielsweise die DE 195 42 656 A1 eine Bremsanlage für ein Kraftfahrzeug, bei welcher sensorisch die Betätigung eines Bremspedals erfasst wird. Anhand der erfassten Bremspedalbetätigung wird dann über eine Steuereinheit ein Servodruckkreis angesteuert. In diesem Servodruckkreis ist eine Druckquelle vorgesehen, die in dem hydraulischen Servodruckkreis einen Servodruck erzeugt. Mittels eines Mehrwegeventils wird das unter Druck stehende Hydraulikfluid dem Hauptbremszylinder zugeführt. Genauer gesagt wird mittels des Servodrucks der innerhalb des Hauptbremszylinders zur Erzeugung eines Bremsdrucks verschiebbare Primärkolben zusätzlich zu der Pedalbetätigungskraft auch noch mit einer aus dem Servodruck resultierenden Servokraft beaufschlagt. Dadurch kann der Primärkolben wirksam innerhalb des Hauptbremszylinders verlagert werden, ohne dass die gesamte zur Erzeugung des Bremsdrucks erforderliche Kraft über das Bremspedal aufgebracht werden muss.

Um zu jedem Zeitpunkt des Betriebs einen hinreichend hohen Servodruck bereitstellen zu können, sieht der Servodruckkreis der DE 195 42 656 A1 einen der Druckquelle nachgeschalteten Druckspeicher vor. Dieser Druckspeicher ist unmittelbar mit dem Servodruckkreis gekoppelt. Wann immer die Druckquelle des Servodruckkreises aktiv ist, wird Hydraulikfluid von dem Servodruckkreis in den Druckspeicher gefördert und in diesem gespeichert. Dies hat allerdings zur Folge, dass in einem Zustand, in welchem in dem Servodruckkreis ein verhältnismäßig geringer Hydraulikdruck herrscht und in welchem die volle Leistung der Druckquelle an sich für die Erzeugung eines Bremsdrucks innerhalb des Hauptbremszylinders zur Verlagerung des Primärkolbens benötigt werden würde, aufgrund der fluidischen Verbindung von Druckspeicher und Druckquelle stets auch ein gewisser Anteil an von der Druckquelle gefördertem Hydraulikfluid in den Druckspeicher gefördert wird. Darunter leidet der Wirkungsgrad und das Ansprechverhalten der Bremsanlage, insbesondere deshalb, weil nicht das gesamte für die Betätigung des Primärkolbens erforderliche Hydraulikfluid aus dem Servodruckkreis in den Hauptbremszylinder gefördert wird.

US 4,723,412 zeigt einen Hilfsdruckkreis für einen Bremskraftverstärker, bei dem ein Druckspeicher nach Maßgabe einer Bremspedalstellung mit Hydraulikfluid beschickt wird. Aufgrund der Bremspedalabhängigen Betätigung kann es zu einer volikommenen Entleerung des Druckspeichers kommen.

Zum weiteren Stand der Technik ist auf die Dokumente DE 35 23 776 A1, US 6,065,815 und DE 100 53 586 A1 zu verweisen.

Es ist demgegenüber eine Aufgabe der vorliegenden Erfindung, .eine Bremsanlage der eingangs bezeichnete Art bereitzustellen, bei welcher der Servodruckkreis situationsgerecht und mit gesteigerter Effektivität arbeitet.

Diese Aufgabe wird durch eine Bremsanlage für ein Kraftfahrzeug mit dem Merkmalen des Anspruchs 1 gelöst.

Erfindungsgemäß erfolgt eine Beschickung des Druckspeichers mit in dem Servodruckkreis enthaltenem bzw. von der Druckquelle gefördertem Hydraulikfluid lediglich dann, wenn es der gegenwärtige Betrieb der gesamten Bremsanlage auch zulässt. Eine derartige Beschickung erfolgt beispielsweise dann, wenn gegenwärtig keine Bremsung durchgeführt wird, die eine Beaufschlagung des Primärkolbens innerhalb des Hauptbremszylinders mit aus dem Servodruckkreis zuströmendem Hydraulikfluid erfordert. In einer derartigen Situation kann die Druckquelle dazu genutzt werden, den Druckspeicher zu "laden", das heißt in diesem ein Druckniveau herzustellen, welches dann in einem späteren Betriebszustand zum Ausgleich von Druckschwankungen genutzt werden kann. Wird allerdings eine Bremsung durch Betätigung des Bremspedals initiiert, so wird die Möglichkeit der Beschickung des Druckspeichers mit von der Druckquelle stammendem Hydraulikfluid begrenzt oder ganz unterbunden, so dass von der Druckquelle gefördertes Hydraulikfluid im Wesentlichen vollständig dem Hauptbremszylinder zugeführt werden kann. Dadurch kann der Primärkolben innerhalb des Hauptbremszylinders zur Erzeugung eines Bremsdrucks schnell und wirksam verlagert werden. Die Erfindung setzt sich somit über die Nachteile der Bremsanlage gemäß der eingangs diskutierten DE 195 42 656 A1 hinweg und ermöglicht eine situationsgerechte Funktion der verschiedenen Komponenten des Servodruckkreises.

Um eine selektive Beschickung des Druckspeichers in Abhängigkeit von dem gegenwärtigen Betriebszustand der Bremsanlage und dennoch eine zuverlässige Abgabe von Hydraulikfluid aus dem Druckspeicher zum Ausgleich von Druckschwankungen zu ermöglichen, ist gemäß der Erfindung vorgesehen, dass der Druckspeicher über eine Beschickungsleitung mit dem Servodruckkreis fluidisch verbunden ist. Durch die Ausbildung der Bremsanlage mit zwei zumindest abschnittsweise separaten Leitungen zur Beschickung des Druckspeichers mit Hydraulikfluid und zur Abgabe von Hydraulikfluid aus dem Druckspeicher ist es möglich, die situationsabhängige Ansteuerung des Druckspeichers zuverlässig zu realisieren. Es ist jedoch auch möglich nur eine Leitung vorzusehen, die sowohl zur Beschickung des Druckspeichers mit Hydraulikfluid als auch zur Abgabe von Hydraulikfluid aus dem Druckspeicher genutzt werden kann.

Die Erfindung sieht ferner vor, dass die Beschickungsleitung eine Fluidzufuhrsteuereinrichtung zur Steuerung der Zufuhr von Hydraulikfluid zu dem Druckspeicher in Abhängigkeit von dem im Servodruckkreis herrschenden Servodruck aufweist.

Zur Überwachung des im Servodruckkreis herrschenden Servodrucks ist erfindungsgemäß ein Drucksensor vorgesehen. In diesem Zusammenhang sieht die Erfindung auch vor, dass die Fluidzufuhreinrichtung ein aktiv ansteuerbares Mehrwegeventil, insbesondere ein Zwei-Wege-Magnetventil, aufweist. Das aktiv ansteuerbare Mehrwegeventil wird anhand der von dem Drucksensor erfassten Daten angesteuert. Beispielsweise kann dieses aktiv ansteuerbare Mehrwegeventil bei Erreichen eines bestimmten Mindestdrucks von seinem geschlossenen Zustand in seinen geöffneten Zustand übergeführt werden und nach Unterschreiten eines bestimmten Mindestdrucks in dem Servodruckkreis wieder geschlossen werden.

Eine Weiterbildung der Erfindung sieht vor, dass die Abgabeleitung mit einem Rückschlagventil ausgebildet ist. Zur Vermeidung von unerwünschten Hydraulikfluidströmungen über die Abgabeleitung zwischen dem Druckspeicher und der die Druckquelle mit dem Hauptbremszylinder verbindenden Hydraulikleitung des Servodruckkreises kann das Rückschlagventil derart eingesetzt werden, dass es lediglich eine Abgabe von Hydraulikfluid aus dem Druckspeicher in den Servodruckkreis zulässt. Auch das Rückschlagventil kann beispielsweise durch eine aktiv ansteuerbare Komponente ersetzt werden.

Hinsichtlich der Ausgestaltung der Druckquelle sieht eine Weiterbildung der Erfindung vor, dass die Druckquelle eine motorisch angetriebene Pumpe aufweist. Ferner kann vorgesehen sein, dass der Servodruckkreis ein der Druckquelle nachgeschaltetes Rückschlagventil aufweist. Das Rückschlagventil ist dabei derart orientiert, dass es ein Fördern von Hydraulikfluid von der Druckwelle in den Servodruckkreis, insbesondere in Richtung des Hauptbremszylinders, zulässt, hingegen ein Zurückströmen von Hydraulikfluid zu der Druckquelle verhindert. Dadurch kann gewährleistet werden, dass der in dem Servodruckkreis aufgebaute Servodruck bei Leistungsschwankungen der Druckquelle sich nicht in Richtung zu der Druckquelle hin abbaut. Insbesondere kann mittels des Rückschlagventils verhindert werden, das der von dem Druckspeicher herrührende auf den Servodruckkreis ausgeübte Servodruck sich nicht in Richtung zu der Druckquelle hin entlädt, sondern in Richtung zum Hauptbremszylinder hin.

Wie vorstehend beschrieben, wird der Servodruckkreis dazu verwendet, den Primärkolben innerhalb des Hauptbremszylinders zum Zwecke einer Erzeugung eines Bremsdrucks im Bremskreis zu verschieben. Für den Fall, dass der Servodruckkreis ausfällt, beispielsweise deshalb, weil die Druckquelle versagt, sollte jedoch gewährleistet sein, dass der Primärkolben auch anderweitig verschoben werden kann, beispielsweise durch eine direkte mechanische Kopplung mit dem Bremspedal. In einem derartigen Fall sollte vermieden werden, dass die auf dem Primärkolben wirkende Betätigungskraft zugleich auch noch zu einer Hydraulikfluidumwälzung innerhalb des Servodruckkreises führt oder dass die Betätigung des Primärkolbens durch die Entstehung eines Überdrucks oder eines Unterdrucks in dem Servodruckkreis behindert wird. Aus diesem Grund, sowie zur generellen Abschirmung von Hauptbremszylinder und Servodruckkreis sieht eine Weiterbildung der Erfindung vor, dass der Servodruckkreis ein zwischen dem Hauptbremszylinder und der Druckquelle sowie dem Druckspeicher zwischengeschaltetes aktiv ansteuerbares Mehrwegeventil, insbesondere ein Zwei-Wege-Magnetventil, aufweist. Mittels des aktiv ansteuerbaren Mehrwegeventils kann der Servodruckkreis von dem Hauptbremszylinder entkoppelt werden und unerwünschte Wechselwirkungen ausgeschlossen werden. Dieses aktiv ansteuerbare Mehrwegeventil kann auch generell zur Steuerung des auf den Primärkolben wirkenden Servodrucks genutzt werden. Es kann darüber hinaus auch dazu genutzt werden, um den Druckspeicher aktiv zu füllen. So ist es beispielsweise möglich, das aktiv ansteuerbare Mehrwegeventil nach Beendigung eines Bremsvorganges zu schließen und die Pumpe über einen vorbestimmten Zeitraum weiter zu betreiben. Dadurch wird in dem durch das aktiv ansteuerbare Mehrwegeventil abgesperrten pumpennahen Teil des Servodruckkreises ein Überdruck erzeugt, der zum Beschicken des Druckspeichers mit Hydraulikfluid genutzt werden kann. Falls der Servodruck in dem Servodruckkreis bei Beendigung der Bremsung bereits groß genug war, um den Druckspeicher zu beschicken, kann die Pumpe auch schon mit Beendigung der Bremsung abgeschaltet werden und der in dem Servodruckkreises herrschende Servodruck zur Beschickung des Druckspeichers zunächst genutzt werden, bevor dieser anderweitig beispielsweise in Richtung zu einem Hydraulikfluidreservoir hin abgebaut wird.

Ferner ist erfindungsgemäß vorgesehen, dass der Servodruckkreis ein zwischen dem Hauptbremszylinder und dem Hydraulikfluidreservoir zwischengeschaltetes weiteres aktiv ansteuerbares Mehrwegeventil, insbesondere ein Zwei-Wege-Magnetventil, aufweist. Dadurch ist es möglich, den Hauptbremszylinder mit dem Hydraulikfluidreservoir zu verbinden und somit nach Beendigung eines Bremsvorgangs in dem Servodruckkreis Servodruck abzubauen. Darüber hinaus kann ein solches weiteres Mehrwegeventil gewährleisten, dass sich bei einer Notfall bedingten mechanischen Betätigung des Primärkolbens kein Überdruck oder Unterdruck in dem Servodruckkreis aufbaut und die Primärkolbenverlagerung behindert oder gar blockiert.

Vorstehend wurde der Fall diskutiert, dass keine ordnungsgemäße Druckerzeugung in dem Servodruckkreis mehr stattfindet, beispielsweise aufgrund eines Ausfalls der Druckquelle. Gleichermaßen ist es möglich, dass der Servodruckkreis einen zu hohen Servodruck liefert, der gegebenenfalls zu einer Überreaktion der Bremsanlage führen könnte. Um ein derartiges Szenario zu verhindern, sieht eine Weiterbildung der Erfindung vor, dass der Servodruckkreis einen der Druckquelle nachgeschalteten druckabhängig aktivierbaren Bypasskanal aufweist. In Abhängigkeit von dem herrschenden Servodruck kann dann der Bypasskanal geöffnet oder geschlossen werden und somit für den Fall eines zu hohen Servodrucks Hydraulikfluid aus dem Servodruckkreis abgeführt werden. Im Normalbetrieb, d. h. dann, wenn der Servodruck innerhalb des Servodruckkreises unterhalb eines vorbestimmten Maximalwerts liegt, ist der Bypasskanal gesperrt.

Eine Weiterbildung der Erfindung sieht vor, dass dem Druckspeicher ein Drucksensor zur Erfassung des in dem Druckspeicher herrschenden Hydraulikdrucks zugeordnet ist. Wie vorstehend bereits allgemein bezüglich des Servodruckkreises ausgeführt, kann auch im Speziellen dem Druckspeicher ein separater Drucksensor zugeordnet werden. Damit kann der augenblickliche "Ladezustand" des Druckspeichers anhand des darin herrschenden Druckes ermittelt und ausgewertet werden, beispielsweise dahingehend, dass bei Unterschreitung eines bestimmten Mindestdrucks innerhalb des Druckspeichers und bei gleichzeitig verfügbarer Leistung der Druckquelle ein aktives Fluidzufuhrsteuerelement geöffnet wird und dem Druckspeicher Hydraulikfluid zur Steigerung des Speicherdrucks zugeführt wird.

Es ist darauf hinzuweisen, dass als Druckspeicher vorzugsweise ein Niederdruckspeicher verwendet wird, dessen maximaler Speicherdruck begrenzt ist. Ein derartiger Niederdruckspeicher ist zwar nur zur temporären Überbrückung eines Druckabfalls, beispielsweise aufgrund von Anlaufverzögerungen des motorischen Antriebs der Druckquelle, geeignet. Er hat allerdings die Vorteile, dass er kostengünstig verfügbar ist, nur wenig Bauraum erfordert und im Betrieb meist ausreichend ist. Die Hauptlast der Druckerzeugung fällt in der Regel ohnehin der Druckquelle zu. Im Hinblick auf die Verwendung eines Niederdruckspeichers erfüllt ein diesem zugeordneter Drucksensor die weitere Aufgabe, auch das Erreichen eines Maximaldrucks zu erfassen, woraufhin ein weiteres Hydraulikfluid dem Druckspeicher zuzuführen ist, um eine Beschädigung oder eine Zerstörung des Niederdruckspeichers zu verhindern. Selbstverständlich sollte der von dem Drucksensor zu erfassende Maximaldruckwert mit hinreichender Sicherheit bezüglich eines Druckwerts gewählt werden, bei welchem tatsächlich am Druckspeicher Schäden auftreten können.

Wie vorstehend bereits dargelegt, kann die erfindungsgemäße Bremsanlage mit einer Vielzahl aktiver Komponenten und Drucksensoren ausgebildet werden. In diesem Zusammenhang sieht eine Weiterbildung der Erfindung eine Steuereinrichtung zur Auswertung von erfassten Hydraulikdrücken und zur Ansteuerung aktiv ansteuerbarer Komponenten vor. Die Steuereinrichtung kann beispielsweise von einem in einem Kraftfahrzeug ohnehin vorhandenen elektronischen Datenverarbeitungssystem gebildet sein, sie kann allerdings auch von einem separaten Datenverarbeitungssystem mit einem separaten Prozessor ausgebildet sein.

In der vorstehenden Beschreibung wurde allgemein dargelegt, dass die Bremsanlage nach Maßgabe einer Betätigung des Bremspedals arbeitet. Dies kann bedeuten, dass einerseits die auf ein Bremspedal ausgeübte Betätigungskraft auf den Primärkolben mechanisch übertragen wird und dass durch den Servodruckkreis die Betätigung des Primärkolbens unterstützt wird. Mit anderen Worten kann die Pedalbetätigungskraft erfasst werden und durch den Servodruckkreis entsprechend verstärkt werden. Alternativ hierzu ist es auch möglich, den Primärkolben und dessen Bewegung im Normalbetrieb vollständig von der Bremspedalbetätigung mechanisch zu entkoppeln. Dies bedeutet, dass die Pedalbetätigung nun nicht mehr unmittelbar auf den Primärkolben übertragen wird, sondern vielmehr die diese bewirkende Energie dissipiert. Die Verlagerung des Primärkolbens erfolgt bei einer derartigen Ausgestaltung der erfindungsgemäßen Bremsanlage dann ausschließlich im Normalbetrieb unter der Wirkung des Servodruckkreises. Dadurch ist im Normalbetrieb der Servodruckkreis allein für die Verlagerung des Primärkolbens verantwortlich ist. Für einen Notbetrieb, in welchem beispielsweise eine Komponente des Servodruckkreises ausfällt, kann dann eine mechanische Kopplung von Bremspedal und Primärkolben vorgesehen sein und beispielsweise nach Überbrückung eines Bewegungspedals hergestellt werden.

Die Erfindung wird im Folgenden beispielhaft anhand der beiliegenden Figuren erläutert. Es stellen dar:
- Figur 1: eine schematische Übersichtsdarstellung einer Bremsanlage zur allgemeinen Erläuterung; und
- Figur 2: eine Übersichtsdarstellung entsprechend Figur 1 eines Ausführungsbeispiels einer erfindungsgemäßen Bremsanlage

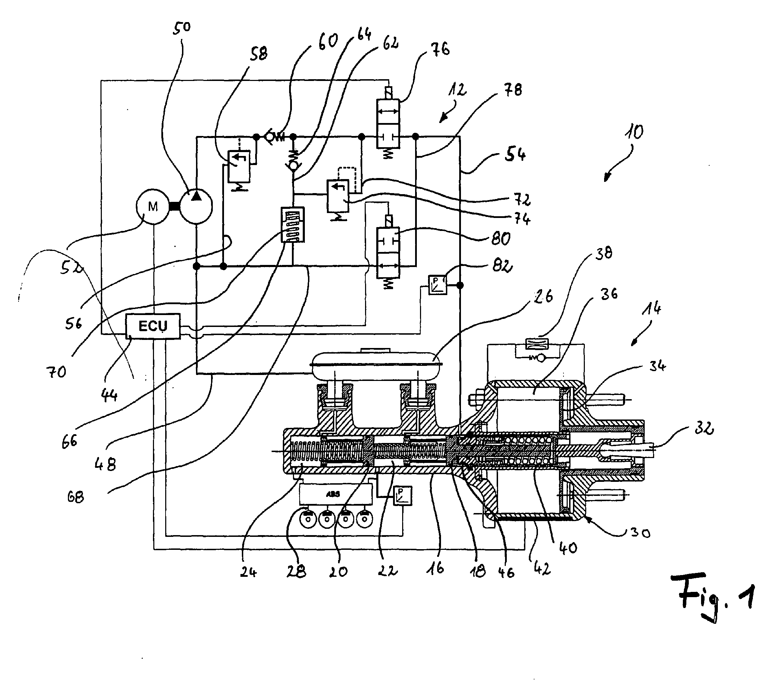

In Figur 1 ist eine Bremsanlage zur allgemeinen Erläuterung gezeigt und allgemein mit 10 bezeichnet. Diese umfasst einen Servodruckkreis 12 und eine Bremszylinderbaugruppe 14.

Die Bremszylinderbaugruppe 14 setzt sich zusammen aus einem Hauptbremszylinder 16, in dem ein Primärkolben 18 verlagerbar geführt ist. In dem Hauptbremszylinder 16 ist ferner ein Sekundärkolben 20 verlagerbar geführt und mit dem Primärkolben 18 mechanisch über eine Federanordnung gekoppelt. Der Primärkolben 18 schließt mit dem Hauptbremszylinder 16 und dem Sekundärkolben 20 eine Primärdruckkammer 22 ein. Der Sekundärkolben 20 schließt mit dem Hauptbremszylinder 16 eine Sekundärdruckkammer 24 ein. Die Primärdruckkammer 22 und die Sekundärdruckkammer 24 sind über jeweilige Zuführkanäle mit einem Hydraulikfluidspeicher 26 zur Zufuhr von Hydraulikfluid in dem in Figur 1 gezeigten Ruhezustand fluidisch gekoppelt. Ferner sind die Primärdruckkammer 22 und die Sekundärdruckkammer 24 mit einem Bremssystem 28 fluidisch gekoppelt, welches in an sich bekannter Weise eine Abbremsung der Räder eines Kraftfahrzeugs bewirken kann.

Die Bremszylinderbaugruppe 14 umfasst ferner eine Pedalsimulationsvorrichtung 30. Im einzelnen weist die Pedalsimulationsvorrichtung 30 ein mit einem Bremspedal mechanisch gekoppeltes Krafteingangsglied 32 auf, welches mit einem Arbeitskolben 34 kraftübertragend verbunden ist. Der Arbeitskolben 34 ist in einer Kolbenkammer 36 verlagerbar, wobei er innerhalb der Kolbenkammer 36 beidseitig Arbeitskammern begrenzt. Durch eine Verschiebung des Arbeitskolbens 34 innerhalb der Kolbenkammer 36 wird ein in den Arbeitskammern beidseits des Arbeitskolbens 34 enthaltenes Gas über eine Drosseleinrichtung 38 von der einen in die jeweils andere Arbeitskammer verlagert und dadurch ein Widerstand gegen eine Bewegung des Krafteingangsglieds 32 erzeugt. Neben dem pneumatisch erzeugten Widerstand wirkt auf das Krafteingangsglied 32 auch ein Widerstand, der aus einer Simulationsfederanordnung 40 resultiert. Diese Simulationsfederanordnung 40 ist mehrstufig aufgebaut, d. h. sie weist eine Feder geringerer Federhärte und eine Feder erhöhter Federhärte auf, welche abgestuft, d.h. mit progressiver Federkennlinie komprimiert werden können.

Jede Pedalbetätigung, d. h. jede Verlagerung des Krafteingangsglieds 32, wird über einen Positionssensor 42 erfasst, wobei der Positionssensor 42 ein Positionssignal an eine elektronische Steuereinheit 44 abgibt, anhand welchem das Vorliegen einer Pedalbetätigung ermittelt werden kann.

Die Bremsanlage 10 gemäß Figur 1 ist derart konzipiert, dass eine Pedalbetätigung, und eine daraus resultierende Verlagerung des Krafteingangsglieds 32 nicht mechanisch auf den Primärkolben 18 übertragen wird, sondern die bei der Pedalbetätigung aufgebrachte Energie vielmehr in der Bremsanlage 10 dissipiert. Zur Durchführung der Bremsung wird in einer Betätigungsdruckkammer 46 mittels des Servodruckkreises 12 ein hydraulischer Druck erzeugt, welcher den Primärkolben 18 und in der Folge den Sekundärkolben 20 verlagert und dadurch für einen Druckaufbau in der Primärdruckkammer 22 und in der Sekundärdruckkammer 24 sorgt. Der Primärkolben 18 ist im Normalbetrieb der Bremsanlage 10 somit vollständig von dem Krafteingangsglied 32 mechanisch entkoppelt.

Im Folgenden soll der Aufbau des Servodruckkreises 12 erläutert werden. Der Servodruckkreis 12 wird mit Hydraulikfluid aus dem Hydraulikfluidspeicher 26 versorgt. Dieses wird über eine Versorgungsleitung 48 von einer Pumpe 50, welche über einen Motor 52 angetrieben ist, aus dem Hydraulikfluidspeicher 26 gefördert. Die Pumpe 50 ist über eine Hydraulikfluidzuführleitung 54 mit der Betätigungsdruckkammer 46 fluidisch gekoppelt. Von der Pumpe 50 ausgehend ist in der Hydraulikfluidzuführleitung 54 eine Abzweigung 56 vorgesehen, welche parallel zu der Pumpe 50 geschaltet ist und welche ein Druckbegrenzungsventil 58 aufweist. Danach ist in die Hydraulikfluidzuführleitung 54 ein Rückschlagventil 60 integriert, welches eine Fluidströmung von der Pumpe 50 in die Betätigungsdruckkammer 46 zulässt, jedoch eine entgegengerichtete Fluidströmung blockiert. Im weiteren Verlauf mündet in die Hydraulikfluidzuführleitung 54 eine Abgabeleitung 62 mit einem Rückschlagventil 64. Das Rückschlagventil 64 ist derart orientiert, dass es eine Fluidströmung von der Hydraulikfluidzuführleitung 54 in die Abgabeleitung 62 hinein blockiert, jedoch eine entgegengerichtete Fluidströmung zulässt. Mit der Abgabeleitung 62 ist ein Druckspeicher 66 gekoppelt. Der Druckspeicher 66 ist als Niederdruckspeicher ausgeführt und derart ausgebildet, dass in ihm Hydraulikfluid bis zu einem bestimmten Maximaldruck gespeichert werden kann. Der Druckspeicher ist in an sich herkömmlicher Weise ausgebildet und auf seiner von dem Rückschlagventil 64 abgewandten Seite mit einer Rückflussleitung 68 gekoppelt. Der Druckspeicher 66 umfasst ferner ein Federelement 70, welches der Druckspeicherung dient.

Im weiteren Verlauf der Hydraulikfluidzuführleitung zweigt von dieser eine Beschickungsleitung 72 ab, welche ebenfalls mit einem Druckbegrenzungsventil 74 versehen ist. Die Beschickungsleitung 72 ist hydraulisch mit dem Druckspeicher 66 gekoppelt.

Ausgehend von der Abzweigung der Beschickungsleitung 72 ist im weiteren Verlauf der Hydraulikfluidzuführleitung 54 ein von der elektronischen Steuereinheit 44 aktiv ansteuerbares Zweiwegeventil 76 angeordnet. Dieses kann, wie in Figur 1 dargestellt, in einen geschlossenen Zustand und in einen geöffneten Zustand geschaltet werden. Schließlich schließt sich an den weiteren Verlauf der Hydrulikfluidzuführleitung 54 noch ein Bypasskanal 78 an, welcher ebenfalls ein von der elektronischen Steuereinheit 44 ansteuerbares Zweiwegeventil 80 aufweist. Im weiteren Verlauf der Hydraulikfluidzuführleitung 54 ist an dieser noch ein Drucksensor 82 angeordnet, welcher den gegenwärtig in der Hydraulikdruckzuführleitung 54 herrschenden Servodruck erfasst und an die elektronische Steuereinheit 44 in Form eines entsprechenden Signals weiterleitet.

Der Servodruckkreis 12 funktioniert wie folgt. Nach Maßgabe der Steuerung der elektronischen Steuereinheit 44 wird der Motor 52 angesteuert, welcher die Pumpe 50 motorisch antreibt. Diese fördert aus dem Hydraulikfluidspeicher 26 Hydraulikfluid in die Hydraulikfluidzuführleitung 54. Über die Hydraulikfluidzuführleitung 54 wird die Betätigungsdruckkammer 46 mit Hydraulikfluid beschickt, so dass sich in dieser bei Bedarf ein Druck aufbaut, welcher bei einer Betätigung des Bremspedals und einer Verlagerung des Krafteingangsglieds 32 dazu führt, dass ohne mechanische Kopplung von Krafteingangsglied 32 und Primärkolben 18 sich der Primärkolben 18 unter Wirkung des in der Betätigungskammer 46 aufgebauten Hydraulikdrucks in Figur 1 nach links verlagert. Dadurch baut sich in der Primärdruckkammer 22 sowie unter Verlagerung des Sekundärkolbens 20 in der Sekundärdruckkammer 24 ein Hydraulikdruck auf.

Bei hinreichend hohem Servodruck in der Hydraulikfluidzuführleitung 54 öffnet sich das Druckbegrenzungsventil 74 in der Beschickungsleitung 72, so dass Hydraulikfluid über die Beschickungsleitung 72 in den Druckspeicher 66 einströmen kann. Übersteigt jedoch der in der Hydraulikfluidzuführleitung 54 herrschende Servodruck einen Maximalwert, so öffnet sich das Druckbegrenzungsventil 58 und schließt den gesamten sich an die Abzweigung 56 anschließenden Teil des Servodruckkreises 12 kurz. Dadurch kann eine Überlastung des Servodruckkreises 12 verhindert werden. Sinkt hingegen der in der Hydraulikfluidzuführleitung 54 herrschende Servodruck unter einen bestimmten Mindestwert, und ist der Druckspeicher 66 hinreichend "geladen", so kann der Druckspeicher 66 bei Bedarf temporär einen Druckabfall ausgleichen. Ein derartiger Druckabfall kann beispielsweise daher rühren, dass aufgrund einer Betätigung des nicht gezeigten Bremspedals das Zweiwegeventil 46 aus seinem in Figur 1 gezeigten geschlossenen Zustand in einen geöffneten Zustand umgeschaltet wird und damit Servodruck aus dem Servodruckkreis 12 der Betätigungsdruckkammer 56 zugeführt wird. Aufgrund einer Anlaufverzögerung des Motors 52, kann jedoch die Pumpe 50 nicht schnell genug Servodruck in dem Servodruckkreis 12 aufbauen, so dass es kurzzeitig zu einem Druckabfall kommt. Dieser wird durch den Druckspeicher 66 ausgeglichen. Das Zweiwegeventil 76 wirkt also, gesteuert durch die elektronische Steuereinheit 44 nach Maßgabe des von dem Positionssensor 42 erhaltenen Signals und weiterer Signale, beispielsweise von dem Drucksensor 82, als Aktivierungselement für die Aktivierung des Servodruckkreises 12. Ferner wirkt das Zweiwegeventil 80 als Druckentlastungsventil für die Hydraulikdruckzuführleitung 54. Es wird beispielsweise in seine in Figur 1 gezeigte geöffnete Stellung geschaltet, wenn keine Bremsbetätigung vorliegt und somit auch ein Druckaufbau in der Betätigungsdruckkammer 46 nicht erforderlich ist. Dadurch kann es auch einen Druckausgleich zwischen dem Hauptbremszylinder und dem Reservoir 26 zulassen. Dies ist insbesondere hinsichtlich eines möglichen Defekts des Servodruckkreises 12 von Bedeutung, bei welchem der Primärkolben 32 mechanisch bewegt werden kann. Durch Öffnen des Zweiwegeventils 80 wird verhindert, dass eine solche mechanische Bewegung des Primärkolbens 32 durch einen im Servodruckkreis 12 dadurch entstehenden Überdruck oder Unterdruck behindert wird. Sobald im Normalbetrieb bei voll funktionsfähigem Servodruckkreis 12 eine Bremsbetätigung über den Positionssensor 42 erfasst wird, wird das Zweiwegeventil 80 in seine geschlossene Stellung geschaltet, so dass Hydraulikfluid über die Hydraulikfluidleitung 54 der Betätigungsdruckkammer 46 zugeführt werden kann.

Ein wesentlicher Aspekt liegt in der fluidischen Anbindung des Druckspeichers 66 in dem Servodruckkreis 12. In der in Figur 1 gezeigten Lösung ist es möglich; dass der Druckspeicher 66 dann mit Hydraulikfluid beschickt wird, wenn ein hinreichend hoher Servodruck in dem Servodruckkreis 12 vorliegt, d. h. dann, wenn die Pumpe 50 hinreichend viel Hydraulikfluid aus dem Hydraulikfluidspeicher 26 fördert. Der Druckspeicher 66 kann dann, wenn er entsprechend geladen ist, Druckschwankungen innerhalb des Servodruckkreises 12 ausgleichen. Dies ist beispielsweise dann erforderlich, wenn aufgrund einer abrupten Bremsung und aufgrund einer Anlaufverzögerung der Einheit aus Pumpe 50 und motorischem Antrieb 52 nicht schnell genug ein Druckaufbau im Servodruckkreis 12 erfolgen kann.

Zur Beschickung des Druckspeichers besteht auch die Möglichkeit, dass das Zweiwegeventil 76 nach Beendigung eines Bremsvorgangs geschlossen wird und die Pumpe 50 über einen vorbestimmten Zeitraum weiter betrieben wird. Dadurch baut sich in dem zwischen der Pumpe 50 und dem Zweiwegeventil 76 liegenden Abschnitt der Hydraulikfluidzuführleitung 54 ein Hydraulikdruck auf, der zum Laden des Druckspeichers 66 genutzt werden kann. Für den Fall, dass bereits bei Beendigung des Bremsvorgangs der Servodruck ausreichend hoch ist, um den Druckspeicher 66 zu laden, kann auch die Pumpe 50 unmittelbar bei Beendigung des Bremsvorgangs abgeschaltet werden und bei geschlossenem Zweiwegeventil 80 und geöffnetem Zweiwegeventil 76 der Druckspeicher 66 geladen werden.

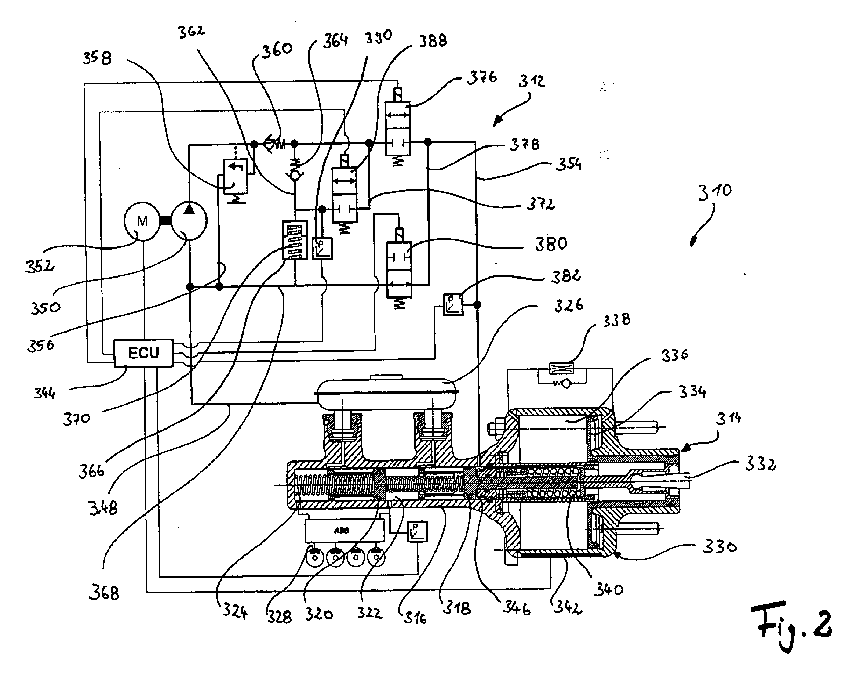

Figur 2 zeigt ein Ausführungsbeispiel der erfindungsgemäßen Bremsanlage. Es soll lediglich die Unterschiede zu Figur 1 beschrieben werden. Für diese Beschreibung werden dieselben Bezugszeichen für gleiche oder gleichwirkende Komponenten verwendet, wie sie bei der Beschreibung der Figur 1 verwendet wurden, jedoch mit der Ziffer "3" vorangestellt.

Beim diesem Ausführungsbeispiel gemäß Figur 2 ist in die von der Hydraulikfluidzuführleitung 354 zu dem Druckspeicher 366 führende Beschickungsleitung 372 ein Zweiwegeventil 388 eingebaut, welches über die elektronische Steuereinheit 344 ansteuerbar ist. Ferner weist die Beschickungsleitung 372 zwischen dem Druckspeicher 366 und dem Zweiwegeventil 388 einen Drucksensor 390 auf. Vermittels des Drucksensors 390 kann der in dem Druckspeicher 366 herrschende Hydraulikdruck erfasst werden. Unterschreitet dieser Hydraulikdruck einen vorbestimmten Mindestwert und liefert die Pumpe 350 einen hinreichend hohen Servodruck in dem Servodruckkreis 312, so wird das Zweiwegeventil 388 von seiner in Figur 2 gezeigten geschlossenen Stellung in die geöffnete Stellung geschaltet. Damit kann Hydraulikfluid ungehindert von der Hydraulikfluidzuführleitung 354 in den Druckspeicher 366 fließen und damit den Druckspeicher 366 laden. Die Veränderung des Druckniveaus im Druckspeicher 366 während dieses Ladevorgangs wird über den Drucksensor 390 und die elektronische Steuereinheit 344 überwacht. Sobald in dem Druckspeicher 366 ein Sollniveau bzw. ein maximal zulässiges Druckniveau erreicht wird, erfasst dies der Drucksensor 390 und gibt ein entsprechendes Signal an die elektronische Steuereinheit 344 aus. Diese steuert dann das Zweiwegeventil 388 an, so dass sich dieses wieder in seine in Figur 2 gezeigte geschlossene Stellung zurückbewegt und damit die fluidische Verbindung über die Beschickungsleitung 372 zu der Hydraulikfluidzuführleitung 354 unterbrochen ist. Mit dem Ausführungsbeispiel gemäß Figur 2 lässt sich somit gezielt und druckabhängig durch aktives Beschalten des Zweiwegeventils 388 der Druckspeicher 366 laden.

Im Übrigen funktioniert die Bremsanlage gemäß Figur 2 so, wie vorstehend mit Bezug auf Figur 1 beschrieben.

Es ist noch anzumerken, dass aufgrund der Wirkung des Zweiwegeventils 388 in einer nicht gezeigten Weiterbildung des Ausführungsbeispiels gemäß Fig. 2 die Abgabeleitung 362 wegelassen werden kann. Der Druckspeicher 366 wird in diesem Fall über die Leitung 372 beschickt und entleert.

Die Erfindung zeigt eine einfache und zuverlässige Möglichkeit, einen Hauptbremszylinder nach Maßgabe einer Bremspedalbetätigung mit einem Servodruck zu versorgen.

Es ist darauf hinzuweisen, dass die Erfindung im Zusammenhang mit einer Bremsanlage beschrieben wurde, bei welcher im Normalbetrieb eine vollständige mechanische Entkopplung zwischen Primärkolben und Krafteingangsglied vorgesehen ist. Gleichermaßen ist es jedoch möglich, die Erfindung in Bremsanlagen zu verwenden, bei weichen keine derartige mechanische Entkopplung zwischen Krafteingangsglied (und damit Bremspedal) und Primärkolben vorgesehen ist und der Servodruck lediglich unterstützend zur Verlagerung des durch Betätigung des Bremspedals unmittelbar bewegten Primärkolbens wirkt.

## Patentansprüche

1. Bremsanlage (310) für ein Kraftfahrzeug mit einem Hauptbremszylinder (316), in welchem nach Maßgabe einer Betätigung eines Bremspedals ein Primärkolben (318) zur Erzeugung eines Bremsdrucks in einem hydraulischen Bremskreis verlagerbar ist, wobei der Primärkolben (318) unter der Wirkung eines hydraulischen Servodruckkreises (312) in dem Hauptbremszylinder (316) verlagerbar ist, wobei der hydraulische Servodruckkreis (312) eine Druckquelle (350) zur Erzeugung des Servodrucks und einen Druckspeicher (366) zur Aufrechterhaltung eines minimalen Servodrucks in dem Servodruckkreis (312) aufweist, wobei der Druckspeicher (366) über eine Beschickungsleitung (372) mit dem Servodruckkreis (312) fluidisch verbunden ist, wobei die Beschickungsleitung (372) eine Fluidzufuhrsteuereinrichtung zur Steuerung der Zufuhr von Hydraulikfluid zu dem Druckspeicher (366) in Abhängigkeit von dem im Servodruckkreis (312) herrschenden Servodruck aufweist, und wobei die Fluidzufuhrsteuereinrichtung ein aktiv ansteuerbares Mehrwegeventil (388) aufweist **dadurch gekennzeichnet, dass** im Servodruckkreis (312) ein Drucksensor (382) zur Erfassung des Servodrucks angeordnet ist, wobei das Mehrwegeventil (388) nach Maßgabe des von dem Drucksensor (382) erfassten Servodrucks ansteuerbar ist.

2. Bremsanlage (310) nach Anspruch 1, **dadurch** gekennzeichent, dass das Mehrwegeventil als ein Zwei-Wege-Magnetventil (388) ausgebildet ist.

3. Bremsanlage (310) nach einem der vorangehenden Ansprüche, **dadurch gekennzeichnet, dass** die Druckquelle eine motorisch (352) angetriebene Pumpe (350) aufweist.

4. Bremsanlage (310) nach einem der vorangehenden Ansprüche, **dadurch gekennzeichnet, dass** der Servodruckkreis (312) ein der Druckquelle (350) nachgeschaltetes Rückschlagventil (360) aufweist.

5. Bremsanlage (310) nach einem der vorangehenden Ansprüche, **dadurch gekennzeichnet, dass** der Servodruckkreis (312) ein zwischen dem Hauptbremszylinder (316) und der Druckquelle (350) sowie dem Druckspeicher (366) zwischengeschaltetes aktiv ansteuerbares Mehrwegeventil (376), insbesondere ein Zwei-Wege-Magnetventil, aufweist.

6. Bremsanlage (310) nach einem der vorangehenden Ansprüche, **dadurch gekennzeichnet, dass** der Servodruckkreis (312) ein zwischen dem Hauptbremszylinder (316) und einem Hydraulikfluidreservoir (326) zwischengeschaltetes weiteres aktiv ansteuerbares Mehrwegeventil (380), insbesondere ein Zwei-Wege-Magnetventil, aufweist.

7. Bremsanlage (310) nach einem der vorangehenden Ansprüche, **dadurch gekennzeichnet, dass** der Servodruckkreis (312) einen der Druckquelle (350) nachgeschalteten druckabhängig aktivierbaren Bypasskanal (356, 378) aufweist.

8. Bremsanlage (310) nach einem der vorangehenden Ansprüche, **dadurch gekennzeichnet, dass** dem Druckspeicher (366) ein Drucksensor (390) zur Erfassung des in dem Druckspeicher (366) herrschenden Hydraulikdrucks zugeordnet ist.

9. Bremsanlage (310) nach einem der vorangehenden Ansprüche, **gekennzeichnet durch** eine Steuereinrichtung (344) zur Auswertung von erfassten Hydraulikdrücken und zur Ansteuerung aktiv ansteuerbarer Komponenten.

10. Bremsanlage (310) nach einem der vorangehenden Ansprüche, **dadurch gekennzeichnet, dass** der Primärkolben (318) von dem Bremspedal mechanisch entkoppelt ist.

## Claims

1. Brake system (310) for a motor vehicle, comprising a master brake cylinder (316) in which a primary piston (318) for generating a brake pressure in a hydraulic brake circuit is adapted to be displaced in response to an actuation of a brake pedal, the primary piston (318) being adapted to be displaced under the effect of a hydraulic servo pressure circuit (312) in the master brake cylinder (316), the hydraulic servo pressure circuit (312) comprising a pressure source (350) for generating the servo pressure and a pressure accumulator (366) for maintaining a minimum servo pressure in the servo pressure circuit (312), the pressure accumulator (366) being fluidically connected to the servo pressure circuit (312) via a supply line (372), the supply line (372) comprising a fluid supply controller for controlling the supply of hydraulic fluid to the pressure accumulator (366) as a function of the servo pressure prevailing in the servo pressure circuit (312), and the fluid supply controller comprising an actively controllable manifold valve (388), **characterised in that** a pressure sensor (382) for detecting the servo pressure is arranged in the servo pressure circuit (312), the manifold valve (388) being controllable according to the servo pressure detected by the pressure sensor (382).

2. Brake system (310) according to claim 1, **characterized in that** the manifold valve is designed as a two-way solenoid valve (388).

3. Brake system (310) according to one of the preceding claims, **characterized in that** the pressure source comprises a motor-driven (352) pump (350).

4. Brake system (310) according to one of the preceding claims, **characterised in that** the servo pressure circuit (312) comprises a non-return valve (360) connected downstream of the pressure source (350).

5. Brake system (310) according to one of the preceding claims, **characterised in that** the servo pressure circuit (312) comprises a manifold valve (376), in particular a two-way solenoid valve, that is actively controllably interconnected between the master brake cylinder (316) and the pressure source (350) as well as the pressure accumulator (366).

6. Brake system (310) according to one of the preceding claims, **characterised in that** the servo pressure circuit (312) comprises a further manifold valve (380), in particular a two-way solenoid valve, that is actively controllably interconnected between the master brake cylinder (316) and a hydraulic fluid reservoir (326).

7. Brake system (310) according to one of the preceding claims, **characterised in that** the servo pressure circuit (312) comprises a bypass channel (356, 378) that is adapted to be activated as a function of pressure and is connected downstream of the pressure source (350).

8. Brake system (310) according to one of the preceding claims, **characterised in that** a pressure sensor (390) for detecting the hydraulic pressure prevailing in the pressure accumulator (366) is associated with the pressure accumulator (366).

9. Brake system (310) according to one of the preceding claims, **characterised by** a controller (344) for evaluating detected hydraulic pressures and for controlling actively controllable components.

10. Brake system (310) according to one of the preceding claims, **characterised in that** the primary piston (318) is mechanically decoupled from the brake pedal.

## Revendications

1. Système de freinage (310) de véhicule à moteur comportant un maître-cylindre (316) dans lequel, sous l'actionnement d'une pédale de frein, un piston primaire (318) se déplace pour générer une pression de freinage dans un circuit de freinage hydraulique, ledit piston primaire (318) se déplaçant sous l'effet d'un circuit hydraulique de pression d'assistance (312) dans le maître-cylindre (316), ledit circuit hydraulique de pression d'assistance (312) étant muni d'une source de pression (350) qui génère la pression d'assistance et d'un accumulateur de pression (366) pour le maintien d'une pression d'assistance minimale dans le circuit de pression d'assistance (312), ledit accumulateur de pression (366) étant fluidiquement relié au circuit de pression d'assistance (312) par une conduite d'alimentation (372), ladite conduite d'alimentation (372) étant munie d'un dispositif de commande de l'alimentation en fluide hydraulique de l'accumulateur de pression (366) en fonction de la pression d'assistance régnant dans le circuit de pression d'assistance (312) et ledit dispositif de commande de l'alimentation en fluide hydraulique étant muni d'une vanne à plusieurs voies (388) actionnable, **caractérisé en ce qu'**un capteur de pression (382) destiné à détecter la pression d'assistance est disposé dans le circuit de pression d'assistance (312), la vanne à plusieurs voies (388) étant actionnée par la pression d'assistance détectée par le capteur de pression (382).

2. Système de freinage (310) selon la revendication 1, **caractérisé en ce que** la vanne à plusieurs voies (388) est constituée par une vanne magnétique à deux voies (388).

3. Système de freinage (310) selon l'une des revendications précédentes, **caractérisé en ce que** la source de pression est munie d'une pompe (350) entraînée par moteur (352).

4. Système de freinage (310) selon l'une des revendications précédentes, **caractérisé en ce que** le circuit de pression d'assistance (312) est muni d'un clapet antiretour (360) monté en aval de la source de pression (350).

5. Système de freinage (310) selon l'une des revendications précédentes, **caractérisé en ce que** le circuit de pression d'assistance (312) est muni d'une vanne à plusieurs voies (376), plus particulièrement d'une vanne magnétique à deux voies, actionnable et intercalée entre le maître-cylindre (316) et la source de pression (350) et l'accumulateur de pression (366).

6. Système de freinage (310) selon l'une des revendications précédentes, **caractérisé en ce que** le circuit de pression d'assistance (312) est muni d'une autre vanne à plusieurs voies (380), plus particulièrement d'une vanne magnétique à deux voies, actionnable et intercalée entre le maître-cylindre (316) et un réservoir de fluide hydraulique (326).

7. Système de freinage (310) selon l'une des revendications précédentes, **caractérisé en ce que** le circuit de pression d'assistance (312) est muni d'un canal de dérivation (356, 378) actionnable en fonction de la pression et monté en aval de la source de pression (350).

8. Système de freinage (310) selon l'une des revendications précédentes, **caractérisé en ce qu'**un capteur de pression (390) est affecté à l'accumulateur de pression (366) pour détecter la pression hydraulique régnant dans l'accumulateur de pression (366).

9. Système de freinage (310) selon l'une des revendications précédentes, **caractérisé par** un dispositif de commande (344) permettant l'évaluation des pressions hydrauliques détectées et la commande des composants actionnables.

10. Système de freinage (310) selon l'une des revendications précédentes, **caractérisé en ce que** le piston primaire (318) est désaccouplé mécaniquement de la pédale de frein.
